# EUROPÄISCHE PATENTSCHRIFT

(11) **EP 0 821 531 B1**
(45) Veröffentlichungstag und Bekanntmachung des Hinweises auf die Patenterteilung: **21.03.2007**
(21) Anmeldenummer: 97111890.6
(22) Anmeldetag: 12.07.1997
(51) Int. Cl.: H04N 7/36, H04N 7/24, H04N 7/50

(54) **Codierung und Decodierung von Trickfilmen**
Encoding and decoding of trick films
Codage et décodage de film de truquage

(30) Priorität: 26.07.1996 DE 19630295
(43) Veröffentlichungstag der Anmeldung: 28.01.1998
(73) Patentinhaber: DEUTSCHE THOMSON-BRANDT GMBH, 78048 Villingen-Schwenningen (DE)
(72) Erfinder: Herpel, Carsten, 30171 Hannover (DE)
(74) Vertreter: Schäferjohann, Volker

(56) Entgegenhaltungen:
- EP-A- 0 590 974
- EP-A- 0 606 675
- US-A- 4 698 682
- US-A- 5 412 430
- US-A- 5 467 136
- US-A- 5 508 750
- "ISO/IEC CD 13818-: INFORMATION TECHNOLOGY - GENERIC CODING OF MOVING PICTURES AND ASSOCIATED AUDIO INFORMATION PART 2: VIDEO" INTERNATIONAL STANDARD - ISO, ZUERICH, CH, Nr. 659, 1. Dezember 1993 (1993-12-01), Seiten A-C,I-VII,1, XP000567291

## Beschreibung

Verfahren zur Codierung und Decodierung von digitalisierten Bildern eines Trickfilms sowie Vorrichtung zur Codierung und Decodierung von digitalisierten Bildern eines Trickfilms

Die Erfindung betrifft ein Verfahren zur Codierung und Decodierung von digitalisierten Bildern eines Trickfilms sowie Vorrichtungen zur Codierung und Decodierung von digitalisierten Bildern eines Trickfilms.

### Stand der Technik

Die Erfindung geht aus von einem Verfahren zur Codierung von digitalisierten Bildern eines Trickfilms nach der Gattung des unabhängigen Anspruchs 1.

Vorbekannte Codierverfahren für Bewegtbilder sind gewöhnlich mit relativ wenigen Optionen definiert. Der MPEG2 Standard hat bereits begonnen, diese Situation zu änderen, da er schon eine größere Anzahl Konfigurationsoptionen erlaubt.

Für künftige Standards zur Kodierung von Bewegtbildern ist es wünschenswert, daß sie noch weitere Flexibilität zulassen, und es damit noch weiter als schon bisher möglich sein wird, die Kodierparameter an die Eigenschaften des zu kodierenden Bildmaterials anzupassen. Hierbei können dann auch spezielle Parameter für Klassen von Bildsignalen berücksichtigt werden, die nicht besonders häufig vorkommen, jedoch durch eine spezielle Parameterwahl deutlich besser kodiert werden können.

Eine solche Klasse von Bildsignalen sind stroboskopartige Wechsel von Bildern aus zwei Bildsequenzen, wie sie beispielsweise bei Musikvideoclips häufig vorkommen. Bei einem solchen Trickfilm folgen also aufeinanderfolgend zuerst eine erste Anzahl von Bildern einer ersten Filmszene und anschließend eine zweite Anzahl einer zweiten Filmszene. Dadurch bedingt treten in diesem Trickfilm häufige Szenenschnitte auf, die jeweils für einen völlig neuen Bildinhalt sorgen. Wird ein derartiger Trickfilm digitalisiert und anschließend nach dem bekannten MPEG2-Standard codiert, so verursachen die häufigen Szenenschnitte ein hohes Datenaufkommen am Ausgang des Codiergerätes. Dies ist dadurch bedingt, daß das Codiergerät keine Redundanzreduktion bei dem ersten Bild nach dem Szenenschnitt aufgrund von einer erfolgreichen Bewegungsschätzung für verschiedene Makroblöcke des Bildes durchführen kann. Es entstehen somit eine große Anzahl von sogenannten intra-codierten Makroblöcken, die bei dem 1. Bild ohne zeitliche Prädiktion codiert werden. Das Datenaufkommen dieser Makroblöcke ist gegenüber uni-direktional bzw. bi-direktional prädiktiv codierten Blöcken wesentlich größer. Bei den uni-direktional bzw. bi-direktional prädiktiv codierten Blöcken wird nur die Differenz zwischen dem zu übertragenden Makroblock und dem bewegungskompensierten Makroblock codiert.

### Erfindung

Es ist Aufgabe der Erfindung, ein Codierverfahren für den beschriebenen Trickfilm anzugeben, bei dem das Datenaufkommen trotz der häufig auftretenden Szenenschnitte deutlich verringert ist. Hierzu ist nur eine kleine Änderung an einem Codierverfahren, wie z.B. MPEG2 nötig, wobei die Hardwarekomplexität praktisch unverändert bleibt.

Erfindungsgemäß findet eine separate Steuerung der beiden Bildspeicher im Codiergerät statt. Und zwar werden die beiden Bildspeicher so betrieben, daß jeweils ein Bildspeicher für die Prädiktion der Bilder der ersten Filmszene verwendet wird und der andere Bildspeicher für die Prädiktion sämtlicher Bilder der zweiten Filmszene verwendet wird. Bei keinem Prädiktionsvorgang werden beide Bildspeicher für die bi-direktionale Prädiktion eines Bildes einer der beiden Filmszenen verwendet. Dieses Verfahren hat gegenüber dem aus dem Stand der Technik bekannten Verfahren den Vorteil, daß bei auftretenden Szenenwechseln das letzte Bild der Filmszene, zu der umgeschaltet wird, noch in einem der Bildspeicher vorhanden ist. Dadurch kann wiederum eine Bewegungsschätzung für das neu zu codierende Bild ausgehend von dem letzten Bild im Bildspeicher vorgenommen werden. Damit treten selbst nach einem Szenenschnitt nicht notwendigerweise intra-codierte Makroblöcke auf und das Datenaufkommen ist beträchtlich verringert.

Besonders vorteilhaft ist, wenn für die Codierung der Bilder des Trickfilms nur die sogenannte Vorwärts-Prädiktion benutzt wird. Bei der Vorwärts-Prädiktion wird die Bewegungsschätzung für ein zu codierendes Bild mit einem Referenzbild durchgeführt, das zeitlich gesehen in der Abfolge der Bilder, so wie sie später auf einem Bildschirm dargestellt werden, vor dem zu codierenden Bild auftritt. Durch die Festlegung des Prädiktions-Modes auf Vorwärts-Prädiktion wird das Codierverfahren vereinfacht. Eine Umsortierung der Bilder für den Codiervorgang fällt dann nämlich weg.

Für den Fall, daß als Prädiktions-Mode sowohl Vorwärts- als auch Rückwärts-Prädiktion zugelassen werden soll, ist es vorteilhaft, wenn eine Umsortierung der Bilder vorgenommen wird, so daß die rückwärts prädizierten Bilder zeitlich verzögert codiert werden und das Bild, von dem aus die Rückwärts-Prädiktion durchgeführt wird, vor den rückwärts prädizierten Bildern codiert werden. Eine derartige Umsortierung ist auch in dem MPEG2-Standard schon vorgesehen. Bei einem rückwärts prädizierten Bild wird die Bewegungskompensation für das zu codierende Bild ausgehend von einem Bild gemacht, daß zeitlich gesehen erst nach dem zu codierenden Bild gezeigt wird.

Ebenfalls vorteilhaft ist, wenn in den Datenstrom für jedes prädizierte Bild eine Information eingefügt wird, die angibt, von welchem Bildspeicher ausgehend das Bild prädiziert werden muß. Diese Angabe entspricht der Angabe, zu welcher Filmszene das Bild gehört. Eine Decodiervorrichtung weiß dann sofort, welcher Bildspeicher für die Bewegungskompensation zu verwenden ist.

Zusätzlich ist es vorteilhaft, wenn in den Datenstrom für jedes prädizierte Bild eine Information eingefügt wird, die angibt, daß das Bild zu einer stroboskopartigen Trickfilmsequenz gehört. Mit dieser Information kann das Decodiergerät eine Umkonfiguration vornehmen, so daß z.B. fest eingestellt wird, daß nur Vorwärts-Prädiktion verwendbar ist, bzw. Vorwärts-Prädiktion und Rückwärts-Prädiktion möglich sind.

In entsprechender Weise ist es für ein Verfahren zur Decodierung von codierten Bildern, die nach dem erfindungsgemäßen Verfahren codiert wurden, vorteilhaft, daß die beiden Bildspeicher im Decodiergerät separat betrieben werden, so daß erneut immer ein und derselbe Bildspeicher für die Prädiktion von Bildern der ersten Filmszene verwendet wird und der andere Bildspeicher für die Prädiktion von Bildern der zweiten Filmszene verwendet wird. Dies erlaubt dem Codiergerät die Bilder auch nach einem Szenenwechsel bewegungskompensiert zu codieren, so daß das Datenaufkommen für die codierten Bilder verringert ist.

Um die Bildverarbeitung im Decodiergerät zu vereinfachen, kann es ebenfalls vorteilhaft sein, wenn für die Prädiktion von Bildern des stroboskopartigen Trickfilms generell nur Vorwärts-Prädiktion erlaubt wird.

Andererseits kann auch Vorwärts-Prädiktion oder Rückwärts-Prädiktion erlaubt werden, wenn wenigstens für die rückwärts prädizierten Bilder eine Umsortierung entsprechend des MPEG2-Standards bezüglich der Ausgabereihenfolge der Bilder durchgeführt wird.

Vorteilhaft ist auch, wenn anhand einer Information, die in den Datenstrom für die prädizierten Bilder eingefügt wurde, entschieden wird, von welchem Bildspeicher ausgehend das Bild prädiziert werden muß. Eine aufwendige Auswerteeinheit, die selbständig ermittelt, von welchem Bildspeicher ausgehend das Bild prädiziert werden muß, kann dadurch eingespart werden.

Weitere vorteilhafte Maßnahmen für eine Vorrichtung zur Codierung von digitalisierten Bildern eines stroboskopartigen Trickfilms, ergeben sich aus den Ansprüchen 10 bis 15. Vorteilhafte Maßnahmen für eine Vorrichtung zur Decodierung von digitalisierten Bildern eines stroboskopartigen Trickfilms ergeben sich aus den Ansprüchen 16 bis 19.

### Zeichnung

Drei Ausführungsbeispiele der Erfindung sind in der Zeichnung dargestellt und werden in der nachfolgenden Beschreibung näher erläutert.
Es zeigen:
- **Fig. 1**: Eine Abfolge von Bildern einer stroboskopartigen Trickfilmsequenz bei der nur I- und P-Bilder codiert werden, wobei nur Vorwärts-Prädiktion verwendet wird;
- **Fig. 2**: eine Abfolge von Bildern einer stroboskopartigen Trickfilmsequenz bei der I-, B- und P-Bilder verwendet werden, wobei nur Vorwärts-Prädiktion erlaubt ist;
- **Fig. 3**: eine Abfolge von Bildern einer stroboskopartigen Trickfilmsequenz, bei der I-, B- und P-Bilder verwendet werden und sowohl Vorwärts- als auch Rückswärts-Prädiktion erlaubt sind;
- **Fig. 4**: ein Blockschaltbild eines Codiergerätes für die Codierung von Bildern eines stroboskopartigen Trickfilms;
- **Fig. 5**: ein Blockschaltbild eines Decodiergerätes für die Decodierung von Bildern eines stroboskopartigen Trickfilms;
- **Fig. 6**: eine Darstellung des Datenstroms für ein codiertes Bild und
- **Fig. 7**: eine Tabelle mit Informationen über das codierte Bild, die am Anfang des Datenstroms für das codierte Bild eingefügt werden.

### Beschreibung der Erfindung

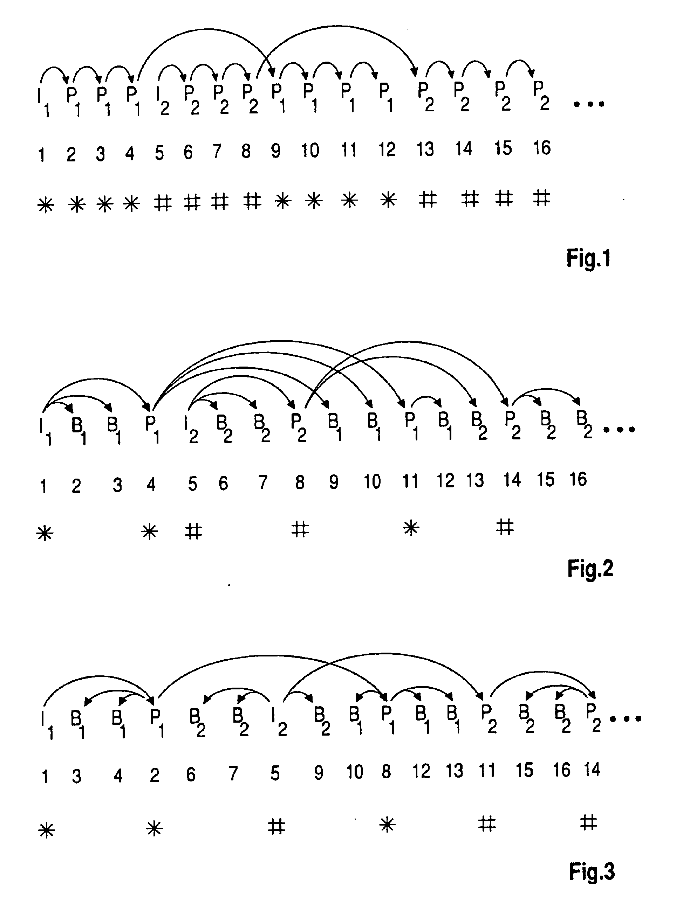

Eine stroboskopartige Trickfilmsequenz zeigt beispielhaft Fig. 1. Darin folgen jeweils 4 Bilder einer zweiten Filmszene auf vier Bilder einer ersten Filmszene. Die Bilder sind jeweils mit Indizes versehen. Der Index 1 bedeutet, daß das jeweilige Bild zu der ersten Filmszene gehört und der Index 2 bedeutet, daß das jeweilige Bild zu der zweiten Filmszene gehört. Das erste dargestellte Bild ist ein I-Bild. Dieses Bild entspricht einem intra-codierten Bild, wie es in dem MPEG2-Standard definiert ist. Es wird diesbezüglich ausdrücklich auf den Video-Teil des MPEG2-Standard Bezug genommen, der auch unter der Nummer ISO/IEC 13818-2 als ISO-Norm bekannt ist.

Die Codierung dieses I-Bildes geht ohne Bewegungskompensation mit Hilfe eines anderen Bildes vonstatten. Auf das erste I-Bild folgen drei P-Bilder der ersten Filmszene. Das P-Bild entspricht einem Bild, das bewegungskompensiert codiert wurde, wobei als Referenz für die Bewegungskompensation ein zeitlich zurückliegendes Bild benutzt wurde. Diese Definition für ein P-Bild ist ebenfalls im MPEG2-Standard enthalten. Der nach rechts gerichtete Pfeil in Fig. 1 ausgehend von jedem P-Bild deutet an, daß das jeweilige P-Bild mit Hilfe der Vorwärts-Prädiktion bewegungskompensiert wurde. Auf die ersten vier Bilder der ersten Filmszene folgen die ersten vier Bilder der zweiten Filmszene. Das erste Bild der zweiten Filmszene ist wiederum ein I-Bild, während die nächsten drei Bilder der zweiten Filmszene P-Bilder sind, die ebenfalls vorwärts prädiziert wurden. Nach den vier Bildern der zweiten Filmszene folgen vier P-Bilder der ersten Filmszene. Das fünfte Bild der ersten Filmszene ist jetzt ein P-Bild. Es wurde ausgehend von dem vierten Bild der ersten Filmszene vorwärts prädiziert. Nach den zweiten vier Bildern der ersten Filmszene folgen dann wieder vier Bilder der zweiten Filmszene. Das fünfte Bild der zweiten Filmszene ist ebenfalls ein P-Bild und wurde mit Hilfe der Vorwärts-Prädiktion ausgehend vom vierten Bild der zweiten Filmszene codiert. Die weitere Abfolge der Bilder der Trickfilmsequenz ist nicht mehr dargestellt. Sie läuft jedoch dementsprechend weiter, wobei jedoch in bestimmten Abständen jeweils wieder ein I-Bild für beide Filmszenen eingefügt werden kann, damit die Bildqualität durch mehrfache Vorwärts-Prädiktion nicht verschlechtert wird. In der Zeile unterhalb der dargestellten Bilder ist die Codierreihenfolge für die Bilder angegeben. Wie deutlich zu erkennen ist, findet keine Umsortierung der Bilder statt, sondern jedes Bild wird in der gleichen Reihenfolge codiert, wie es auch am Eingang des Codiergerätes erscheint. In der zweiten Zeile unterhalb der dargestellten Abfolge der Bilder ist angegeben, in welchen Bildspeicher das jeweilige Bild eingetragen wird. Das *-Symbol deutet an, daß das zugehörige Bild in den ersten Bildspeicher eines Codiergerätes eingeschrieben wird, und das #-Zeichen deutet an, daß das zugehörige Bild in den zweiten Bildspeicher eines Codiergerätes eingeschrieben wird. Zu beachten ist, daß der Bildspeicher jeweils nur Platz für ein Bild aufweist, so daß bei einem erneuten Einschreiben eines Bildes in den gleichen Speicher das zuvor abgespeicherte Bild überschrieben wird. Anhand der Fig. 1 ist dann erkennbar, daß z.B. bei der Codierung des fünften Bildes der ersten Filmszene noch das vierte Bild der ersten Filmszene in dem zugehörigen Bildspeicher abgespeichert ist, so daß die Vorwärts-Prädiktion ausgehend von dem vierten Bild der ersten Filmszene durchgeführt werden kann. Umgekehrt ist z.B. auch erkennbar, daß bei der Codierung des fünften Bildes der zweiten Filmszene noch das vierte Bild der zweiten Filmszene im zugehörigen Bildspeicher abgespeichert ist, so daß ebenfalls eine Vorwärts-Prädiktion ausgehend von dem vierten Bild der zweiten Filmszene durchgeführt werden kann.

In Fig. 2 ist eine andere Abfolge von Bildern für eine stroboskopartige Trickfilmsequenz dargestellt. Erneut folgen wieder vier Bilder einer zweiten Filmszene auf vier Bilder einer ersten Filmszene. Hier werden jedoch außer I-und P-Bildern auch noch sogenannte B-Bilder codiert. Ein B-Bild entspricht nach dem MPEG2-Standard einem Bild, das bewegungskompensiert codiert wird, wobei für die Bewegungskompensation ein zeitlich zurückliegendes Bild und/oder ein zeitlich nachfolgendes Bild als Referenz benutzt wird. Für das in Fig. 2 dargestellte CodierVerfahren bedeutet ein B-Bild entsprechend der dargestellten Pfeile, daß es nur von einem zeitlich zurückliegenden Bild prädiziert wird, d.h. daß Vorwärts-Prädiktion verwendet wird. Es entspricht insofern einem P-Bild, jedoch unterscheidet es sich von diesem zumindest dadurch, daß bei der Codierung dieses B-Bildes größere Toleranzen hinsichtlich des Prädiktionsfehlers zugelassen sind. Ein B-Bild verursacht deshalb ein geringeres Datenaufkommen als ein P- und ein I-Bild. Anhand der Fig. 2 ist erkennbar, daß z.B. das fünfte, sechste und siebte Bild der ersten Filmszene ausgehend von dem vierten Bild der ersten Filmszene prädiziert wird. Dies ist jedoch nur möglich, wenn das fünfte und sechste Bild der ersten Filmszene nicht in den zugehörigen Bildspeicher eingetragen werden. Dies ist auch der Fall, wie an der zweiten Zeile unterhalb der dargestellten Bildabfolge erkennbar ist. Wie dort erkennbar ist, entspricht die Codierreihenfolge der Bilder in diesem Ausführungsbeispiel ebenfalls der zeitlichen Abfolge der Bilder am Eingang des Codiergerätes.

Die Fig. 3 zeigt eine weitere Abfolge von Bildern eines stroboskopartigen Trickfilms. In dieser Abfolge treten ebenfalls I-, B- und P-Bilder auf. Der Unterschied gegenüber der Abfolge in Fig. 2 besteht jedoch darin, daß die B-Bilder nicht mehr ausschließlich nur durch Vorwärts-Prädiktion bewegungskompensiert werden, sondern daß in diesem Fall sowohl Vorwärts-Prädiktion als auch Rückwärts-Prädiktion zugelassen ist. Wie anhand der Pfeile in der Fig. 3 erkennbar ist, werden einige B-Bilder der ersten Filmszene mit Rückwärts-Prädiktion bewegungskompensiert. Die ersten beiden und das sechste und siebte Bild der zweiten Filmszene werden ebenfalls durch Rückwärts-Prädiktion bewegungskompensiert. Für die rückwärts prädizierten Bilder muß dann jedoch eine Umsortierung bezüglich der Codierreihenfolge erfolgen. Wie in der Zeile unterhalb der Bildabfolge in Fig. 3 dargestellt ist, wird nach dem ersten Bild der ersten Filmszene zunächst das vierte Bild der ersten Filmszene codiert und anschließend das zweite und das dritte Bild codiert. Dabei findet dann die rückwärtige Prädiktion für das zweite und dritte Bild der ersten Filmszene ausgehend von dem vierten Bild der ersten Filmszene statt. Als nächstes Bild wird dann das dritte Bild der zweiten Filmszene codiert. Es handelt sich um ein I-Bild. Danach folgt dann die Codierung des ersten Bildes der zweiten Filmszene und die Codierung des zweiten Bildes der zweiten Filmszene. Anschließend erfolgt als nächstes die Codierung des sechsten Bildes der ersten Filmszene, welches als P-Bild codiert wird. Erst dann folgt die Codierung des vierten Bildes der zweiten Filmszene mittels Vorwärts-Prädiktion ausgehend von dem dritten Bild der zweiten Filmszene. Daraufhin folgt die Codierung des fünften Bildes der ersten Filmszene mittels rückwärtiger Prädiktion. Die weitere Abfolge ist anhand der zweiten Zeile in Fig. 3 leicht erkennbar. Erneut werden nur die I-und die P-Bilder in den zugehörigen Bildspeicher eingetragen, wie anhand der dritten Zeile in Fig. 3 leicht erkennbar ist. Die Änderung der Codierreihenfolge entspricht der im MPEG2-Standard vorgeschlagenen Codierreihenfolge für eine derartige Abfolge von I-, B- und P-Bildern.

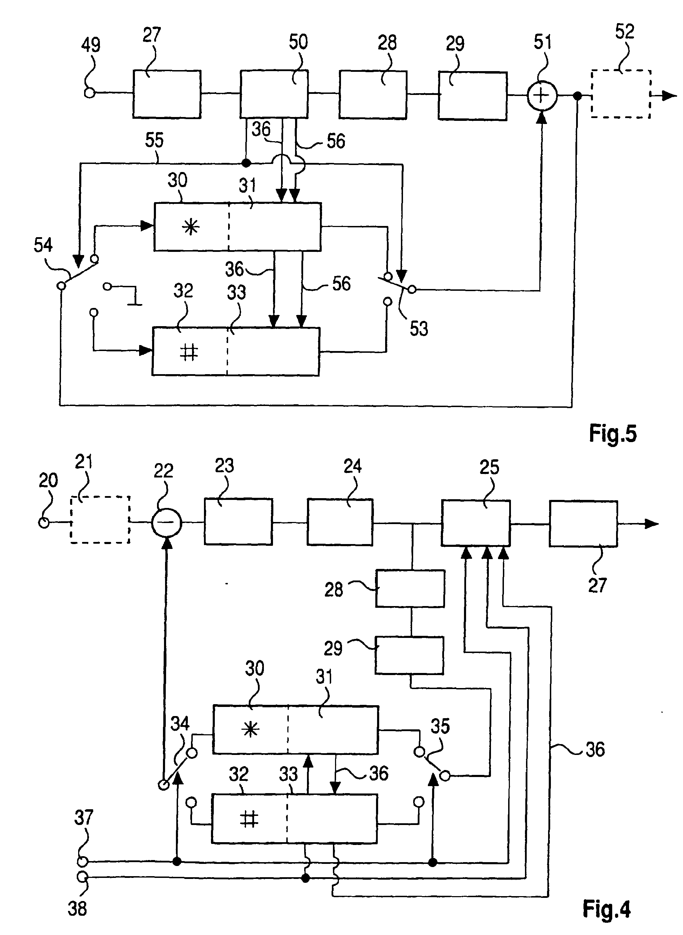

Der Aufbau eines erfindungsgemäßen Codiergerätes wird nachfolgend anhand der Fig. 4 erläutert. Mit der Bezugszahl 20 ist der Bildeingang des Codiergerätes bezeichnet. An diesem Eingang stehen die digitalisierten Bilder an. Die Bezugszahl 21 bezeichnet eine Sortiereinheit. In dieser Einheit findet die schon zuvor erwähnte Umsortierung von Bildern statt, um die Codierreihenfolge jeweils so zu verändern, daß die B-Bilder jeweils später als das auf die B-Bilder folgende P- oder I-Bild codiert werden. Die Sortiereinheit 21 ist jedoch nur optional vorgesehen und kann für die in den Figuren 1 und 2 dargestellten Ausführungsbeispiele ganz entfallen. Mit der Bezugszahl 22 ist eine Subtraktionseinheit bezeichnet. An die Subtraktionseinheit 22 ist eine DCT-Einheit angeschlossen. In dieser Einheit findet die diskrete Cosinus-Transformation statt, wie sie auch bei aus dem Stand der Technik bekannten Codiereinrichtungen verwendet wird. Die Bezugszahl 24 bezeichnet eine Quantisiereinheit. Hier werden die in der DCT-Einheit 23 erhaltenen Koeffizienten quantisiert. Die Bezugszahl 25 bezeichnet eine VLC-Einheit. In dieser Einheit 25 findet eine variable Längenkodierung der Koeffizienten nach DCT-Transformation statt. Außerdem arbeitet diese Einheit auch als Multiplex-Einheit, so daß hier auch zusätzliche Informationen in den Datenstrom eingefügt werden können.

Der entstehende Datenstrom wird in den Pufferspeicher 27 weitergeleitet. Am Ausgang des Pufferspeichers 27 stehen die codierten Bilder in der Codierreihenfolge an. Mit der Bezugszahl 28 ist eine Dequantisiereinheit bezeichnet. Die aus der Quantisiereinheit 24 kommenden Daten werden also in der Dequantisiereinheit gleich wieder invers quantisiert. Anschließend folgt dann in einer IDCT-Einheit eine inverse diskrete Cosinus-Transformation. Somit steht am Ausgang der IDCT-Einheit 29 das rekonstruierte Bild an.

Dieses Bild wird über die Schalteinheit 35 entweder in eine erste MC-Einheit 31 oder eine zweite MC-Einheit 33 eingetragen. Die jeweilige MC-Einheit 31, 33 führt eine Bewegungskompensation für das rekonstruierte Bild durch. Dazu bedient es sich eines Referenzbildes, das in dem zugehörigen ersten bzw. zweiten Bildspeicher 30, 32 noch abgespeichert ist. Die MC-Einheit ermittelt Bewegungsvektoren, die über den MV-Bus 36 zu der VLC-Einheit 25 weitergeleitet werden. Beide MC-Einheiten 31 und 33 haben Zugriff auf den MV-Bus 36. Das bewegungskompensierte Bild steht dann am Ausgang eines der MC-Einheiten 31 bzw. 33 an. Es wird über die zweite Schalteinheit 34 zu der Subtraktionsstelle 22 weitergeleitet. Der Einfachheit halber ist der Ausgang jeweils als Ausgang von den Bildspeichern 30, 32 in Fig. 4 dargestellt worden. An der Subtraktionseinheit 22 wird also die Differenz zwischen einem am Eingang 20 anstehenden Bild und dem zugehörigen bewegungskompensierten Bild gebildet. Nur die Differenz beider Bilder wird dann in den Einheiten 23 bis 25 verarbeitet, wodurch das Datenaufkommen beträchtlich verringert ist. Es bleibt noch zu erwähnen, daß die Differenzbildung an der Subtraktionseinheit 22 sowie die Durchführung der Bewegungskompensation über die Einheiten 30 bis 35 nur für die B- und P-Bilder durchgeführt wird. Für ein I-Bild wird keine Bewegungskompensation durchgeführt.

Die Schaltungseinheiten 20 bis 33 sind auch bei aus dem Stand der Technik bekannten Codiergeräten vorhanden. Es wird diesbezüglich auf den MPEG2-Standard verwiesen. Darin sind die Funktionsweisen der einzelnen Einheiten sehr genau beschrieben. Ein wesentlicher Unterschied gegenüber den bekannten Codiergeräten besteht in der Steuerung der beiden Bildspeicher 30, 32 und MC-Einheiten 31, 33. Dazu dienen die Schalteinheiten 34 und 35. Die Codiereinrichtung besitzt einen Filmszenenkennungssignaleingang 37. Weiterhin ist noch ein Trickfilmkennungssignaleingang 38 vorgesehen. Liegt kein Trickfilmkennungssignal an, so werden die Schalteinheiten 34 und 35 gemäß dem MPEG2-Standard benutzt.

Über den Trickfilmkennungssignaleingang 38 gibt eine externe Einheit das Signal, das nachfolgend ein Trickfilm zu codieren ist, bei dem abwechselnd aufeinander eine erste Anzahl Bilder für eine erste Filmszene und eine zweite Anzahl Bilder einer zweiten Filmszene codiert werden müssen. Die externe Einheit kann Teil einer Studioeinrichtung sein. Diese externe Einheit gibt dann auch gleichzeitig das Filmszenenkennungssignal über den Eingang 37 aus. Damit wird der Codiereinrichtung mitgeteilt, ob aktuell Bilder der ersten Filmszene oder Bilder der zweiten Filmszene anstehen. Mit diesem Signal werden dann die Schalteinheiten 34 und 35 gesteuert. Dadurch ist gewährleistet, daß immer aus dem richtigen Bildspeicher 30, 32 prädiziert wird, je nachdem, ob das zu codierende Bild zu der ersten Filmszene oder zu der zweiten Filmszene gehört. Am Ende eines Codierungsvorgangs wird das am Ausgang der IDCT-Einheit anstehende rekonstruierte Bild in den zugehörigen Bildspeicher 30, 32 eingetragen. Dies geschieht jedoch nur für I- und P-Bilder, nicht jedoch für B-Bilder.

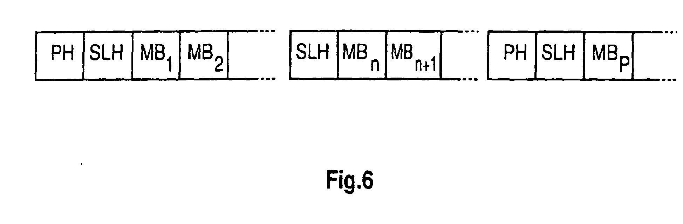

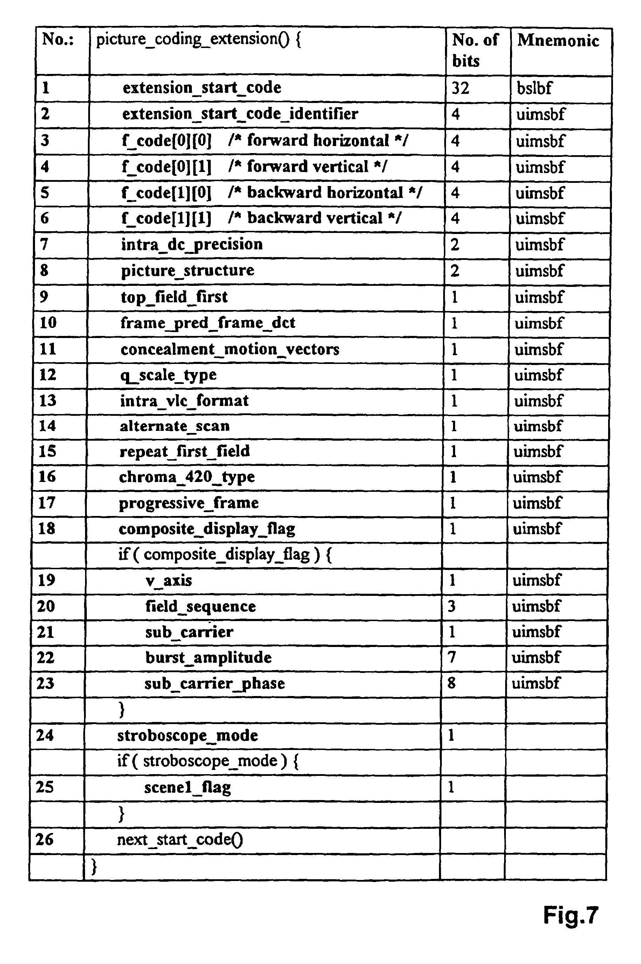

Zu erwähnen ist noch, daß über das Trickfilmkennungssignal am Eingang 38 eine Konfiguration der gesamten Codiereinrichtung durchgeführt werden kann. Im Fall der Ausführungsbeispiele in den Figuren 1 und 2 können dann z.B. die MC-Einheiten 31 und 33 so eingestellt werden, daß nur noch Vorwärts-Prädiktion zulässig ist. Im Fall des Ausführungsbeispiels in Fig. 3 können die MC-Einheiten so eingestellt sein, daß sowohl Vorwärts- als auch Rückwärts-Prädiktion für die B-Bilder zugelassen ist. Die jeweilige Information an den Eingängen 37 und 38 wird auch zu der VLC-Einheit 25 weitergeleitet. Diese Einheit fügt die entsprechende Information an geeigneter Stelle in den Datenstrom eines codierten Bildes ein. Dies wird nachfolgend noch anhand der Figuren 6 und 7 erläutert.

Der Aufbau eines erfindungsgemäßen Decodiergerätes wird nachfolgend anhand der Fig. 5 erläutert. Gleiche Bezugszahlen in Fig. 5 wie in Fig. 4 bezeichnen die gleichen Komponenten wie in Fig. 4. Diese Komponenten werden deshalb hier im einzelnen nicht noch mal näher erläutert. Am Eingang 49 der Decodiereinrichtung stehen die codierten Bilder entsprechend der Codierreihenfolge an. Sie werden zuerst in den Pufferspeicher 27 übernommen. Anschließend folgt eine VLD-Einheit 50. Diese Einheit 50 dient zur Decodierung der variablen Längencodierung gemäß VLC-Einheit 25 von Fig. 4. Sie dient ebenfalls als Demultiplex-Einheit zur Selektion bestimmter Informationen aus dem Datenstrom, was nachfolgend noch genauer erläutert wird. Die decodierten Daten werden der Dequantisiereinheit 28 zugeführt. In der IDCT-Einheit 29 findet dann die inverse diskrete Cosinus-Transformation statt. Die entstehenden Daten werden einer Additionseinheit 51 weitergeleitet. Das entstandene Bild wird schließlich noch in einer Desortier-Einheit 52 bezüglich der Bildreihenfolge umsortiert. Die Bilder werden nicht in der Codierreihenfolge ausgegeben sonder in der Bildfolge, wie sie auch am Eingang 20 des Codiergerätes anstanden.

Zur bewegungskompensierten Decodierung der Bilder ist ebenfalls ein erster Bildspeicher 30 und ein zweiter Bildspeicher 32 sowie eine erste MC-Einheit 31 und eine zweite MC-Einheit 33 vorgesehen. Den MC-Einheiten 31 und 33 können über den MV-Bus 36 die Daten für die Bewegungsvektoren eingegeben werden. Das am Ausgang der Additionseinheit 51 anstehende Bild wird zum Abschluß der Decodieroperation in einen der Bildspeicher 30 bzw. 32 als Referenzbild eingeschrieben. Dabei ist zu beachten, daß nur die I- und P-Bilder in einen der Bildspeicher eingeschrieben werden, nicht jedoch die B-Bilder. Die Steuerung der Bildspeicher und der zugehörigen MC-Einheiten geschieht mit Hilfe der in den Datenstrom eingefügten Informationen bezüglich des Filmszenenkennungssignals und des Trickfilmkennungssignals. Falls keine Trickfilmkennungssignalinformation eingeht, erfolgt die Steuerung gemäß MPEG2-Standard.

Diese Informationen werden in der VLD-Einheit 50 aus dem Datenstrom ausgefiltert. Die Information bezüglich des Filmszenenkennungssignals wird dann über die Leitung 55 zu den Schalteinheiten 53 und 54 übertragen. Auf die Schalteinheit 54 wirkt jedoch zusätzlich noch die Information, ob das zu decodierende Bild ein I-Bild, P-Bild oder ein B-Bild ist. Wenn es sich um ein B-Bild handelt, dann wird die Schalteinheit 54 in die dritte Stellung gebracht, in der das am Ausgang der Additionseinheit 51 anstehende Bild in keines der beiden Bildspeicher 30 oder 32 eingetragen wird. Die Schalteinheit 53 bewirkt, daß jeweils das aus dem für die entsprechende Filmszene zugehörigen Bildspeicher bewegungskompensierte Bild zur Additionseinheit 51 weitergeleitet wird. Die Information bezüglich des Trickfilmkennungssignals wird ebenfalls von der VLD-Einheit 50 aus dem Datentstrom für das zu decodierende Bild herausgefiltert. Diese Information wird über die Leitung 56 zu den MC-Einheiten 31 und 33 weitergeleitet. Sie sorgt für eine entsprechende Umkonfiguration dieser Einheiten, so daß z.B. nur Vorwärts-Prädiktion nachfolgend für sämtliche Makro-Blöcke des zu decodierenden Bildes erlaubt ist, oder alternativ dazu, daß sowohl Vorwärts- als auch Rückwärts-Prädiktion für die Makro-Blöcke eines B-Bildes erlaubt sind.

Die grobe Struktur des Datenstroms für ein codiertes Bild ist in Fig. 6 gezeigt. Mit dem Bezugszeichen PH ist ein Datenfeld bezeichnet, das allgemeine Informationen zu dem codierten Bild beinhaltet. Mit dem Bezugszeichen SLH ist ein Datenfeld bezeichnet, in dem zugehörige Informationen für eine horizontale Reihe von Makro-Blöcken des zu codierenden Bildes enthalten sind. Mit den Bezugszeichen MB1, MB2, usw. sind Datenfelder bezeichnet, die die relevanten Bilddaten für die jeweiligen Makro-Blöcke der horizontalen Reihe enthalten. Ein Bild besteht aus einer größeren Anzahl von horizontalen Reihen, wie in Fig. 6 angedeutet ist. Auch der Anfang des nachfolgenden Bildes ist in Fig. 6 noch dargestellt.

Die zusätzlichen Informationen für die Steuerung der Bildspeicher in der Decodiereinrichtung werden zusätzlich in das Datenfeld PH für die Informationen für das zu decodierende Bild eingefügt.

Fig. 7 zeigt den Aufbau des Datenfeldes PH nach dem MPEG2-Standard erweitert um die erfindungsgemäßen zusätzlichen Informationen. Die einzelnen angegebenen Informationen mit den Nummern 1 bis 23 sind in dem MPEG2-Standard definiert und brauchen deshalb hier nicht näher erläutert zu werden. Erfindungsgemäß werden zusätzlich die neuen Informationen 24 und 25 in das Datenfeld eingefügt. Die Information Stroboscope_Mode dient zur Signalisierung, daß das Bild zur stroboskopartigen Trickfilmsequenz gehört. Für diese Information reicht ein zusätzliches Bit aus. Die weitere Information mit der Nummer 25 (Scene 1-Flag) kennzeichnet, ob das Bild zur ersten Filmszene oder zur zweiten Filmszene gehört. Diese Information ist nur dann vorhanden, wenn die Information Stroboscope_Mode in den Datenstrom eingefügt ist. Da die zusätzlichen Informationen im MPEG2-Standard nicht definiert sind, können nur solche Decodiergeräte diese Information richtig auswerten, die dafür zusätzlich ausgelegt sind. Alternativ können die beiden Informationen auch an anderer Stelle innerhalb des Datenstromes eingefügt werden. So z.B. als Erweiterung zu dem Datenfeld für die allgemeinen Bildinformationen. Solche zusätzlichen Erweiterungen läßt der MPEG2-Standard zu.

## Patentansprüche

1. Verfahren zur Codierung einer MPEG2-Bildsequenz unter Verwendung von DCT-Transformation (23) und Quantisierung (24), **gekennzeichnet durch**:
- die Bildsequenz enthält einen stroboskopartigen Wechsel zwischen zwei verschiedenen Filmszenen (*, #) bei der sich jeweils eine Gruppe von Bildern (1-4; 9-12) einer ersten Filmszene mit einer Gruppe von Bildern (5-8; 13-16) einer zweiten Filmszene abwechselt;
- es werden zur Codierung der Bildsequenz zwei Bildspeicher verwendet, wobei der eine Bildspeicher (30) zur Prädiktion von Bildern der ersten Filmszene verwendet wird und der andere Bildspeicher (32) zur Prädiktion von Bildern der zweiten Filmszene verwendet wird und die beiden Bildspeicher nur I-Bilder oder P-Bilder speichern aber keine B-Bilder;
- wenn das erste Bild einer aktuellen Gruppe von Bildern kein I- oder P-Bild ist, wird das vor dem I- oder P-Bild liegende Bild oder die vor dem I- oder P-Bild liegenden Bilder von dem letzten I- oder P-Bild in der vorhergehenden Gruppe der gleichen Filmszene vorwärts prädiziert und/oder von dem ersten I- oder P-Bild in der aktuellen Gruppe rückwärts prädiziert;
- in den Datenstrom für die codierte Bildsequenz wird für wenigstens jedes prädizierte Bild des stroboskopartigen Wechsels eine Information (stroboscope_mode) darüber eingefügt dass das Bild zu einer Stroboskop-Sequenz gehört, und eine Information (scenel_flag) darüber vom Inhalt welches der beiden Bildspeicher (30, 32) das aktuelle Bild prädiziert wurde.

2. Vorrichtung zur Codierung einer MPEG2-Bildsequenz unter Verwendung von DCT-Transformation (23) und Quantisierung (24), wobei die Bildsequenz einen stroboskopartigen Wechsel zwischen zwei verschiedenen Filmszenen (*, #) enthält bei der sich jeweils eine Gruppe von Bildern (1-4; 9-12) einer ersten Filmszene mit einer Gruppe von Bildern (5-8; 13-16) einer zweiten Filmszene abwechselt, und wobei die Vorrichtung versehen ist mit:
- zwei Bildspeichern und zwei MC-Einheiten, wobei der eine Bildspeicher (30) zur Prädiktion von Bildern der ersten Filmszene in der ersten MC-Einheit (31) dient und der andere Bildspeicher (32) zur Prädiktion von Bildern der zweiten Filmszene in der zweiten MC-Einheit (33) dient und die beiden Bildspeicher nur I-Bilder oder P-Bilder speichern aber keine B-Bilder,
und wobei, wenn das erste Bild einer aktuellen Gruppe von Bildern kein I- oder P-Bild ist, das vor dem I- oder P-Bild liegende Bild oder die vor dem I- oder P-Bild liegenden Bilder von dem letzten I- oder P-Bild in der vorhergehenden Gruppe der gleichen Filmszene vorwärts prädiziert werden und/oder von dem ersten I- oder P-Bild in der aktuellen Gruppe rückwärts prädiziert werden,
- Mitteln (25) die in den Datenstrom für die codierte Bildsequenz für wenigstens jedes prädizierte Bild des stroboskopartigen Wechsels eine Information (stroboscope_mode) darüber einfügen dass das Bild zu einer Stroboskop-Sequenz gehört, und eine Information (scenel_flag) darüber einfügen vom Inhalt welches der beiden Bildspeicher (30, 32) das aktuelle Bild prädiziert wurde.

3. Verfahren zur Decodierung einer MPEG-codierten Bildsequenz unter Verwendung von inverser Quantisierung (28) und inverser DCT-Transformation (29), **gekennzeichnet durch**:
- die Bildsequenz enthält einen stroboskopartigen Wechsel zwischen zwei verschiedenen Filmszenen (*, #) bei der sich jeweils eine Gruppe von Bildern (1-4; 9-12) einer ersten Filmszene mit einer Gruppe von Bildern (5-8; 13-16) einer zweiten Filmszene abwechselt;
- wenn aufeinanderfolgende Bilder zu einer Stroboskop-Sequenz gehören werden zur Decodierung der Bildsequenz zwei Bildspeicher verwendet, wobei der eine Bildspeicher (30) zur Prädiktion (31) von Bildern der ersten Filmszene verwendet wird und der andere Bildspeicher (32) zur Prädiktion (33) von Bildern der zweiten Filmszene verwendet wird und die beiden Bildspeicher nur I-Bilder oder P-Bilder speichern aber keine B-Bilder;
- aus dem Datenstrom für die codierte Bildsequenz wird für wenigstens jedes prädizierte Bild des stroboskopartigen Wechsels eine Information (stroboscope_mode) darüber entnommen (50) dass das Bild zu einer Stroboskop-Sequenz gehört, und eine Information (scene1_flag) darüber vom Inhalt welches der beiden Bildspeicher (30, 32) das aktuelle Bild zu prädizieren ist;
- wenn das erste Bild einer aktuellen Gruppe von Bildern kein I- oder P-Bild ist, wird bei der Decodierung das vor dem I- oder P-Bild liegende Bild oder die vor dem I- oder P-Bild liegenden Bilder von dem letzten I- oder P-Bild in der vorhergehenden Gruppe der gleichen Filmszene vorwärts prädiziert und/oder von dem ersten I- oder P-Bild in der aktuellen Gruppe rückwärts prädiziert.

4. Vorrichtung zur Decodierung einer MPEG-codierten Bildsequenz unter Verwendung von inverser Quantisierung (28) und inverser DCT-Transformation (29), wobei die Bildsequenz einen stroboskopartigen Wechsel zwischen zwei verschiedenen Filmszenen (*, #) enthält bei der sich jeweils eine Gruppe von Bildern (1-4; 9-12) einer ersten Filmszene mit einer Gruppe von Bildern (5-8; 13-16) einer zweiten Filmszene abwechselt, und wobei die Vorrichtung versehen ist mit:
- zwei Bildspeichern und zwei MC-Einheiten, wobei, wenn aufeinanderfolgende Bilder zu einer Stroboskop-Sequenz gehören, bei der Decodierung der Bildsequenz der eine Bildspeicher (30) zur Prädiktion von Bildern der ersten Filmszene in der ersten MC-Einheit (31) dient und der andere Bildspeicher (32) zur Prädiktion von Bildern der zweiten Filmszene in der zweiten MC-Einheit (33) dient und die beiden Bildspeicher nur I-Bilder oder P-Bilder speichern aber keine B-Bilder;
- Mittel (50) die aus dem Datenstrom für die codierte Bildsequenz für wenigstens jedes prädizierte Bild des stroboskopartigen Wechsels eine Information (stroboscope_mode) darüber entnehmen dass das Bild zu einer Stroboskop-Sequenz gehört, und eine Information (scenel_flag) darüber entnehmen vom Inhalt welches der beiden Bildspeicher (30, 32) das aktuelle Bild prädiziert wurde,
und wobei, wenn das erste Bild einer aktuellen Gruppe von Bildern kein I- oder P-Bild ist, das vor dem I- oder P-Bild liegende Bild oder die vor dem I- oder P-Bild liegenden Bilder von dem letzten I- oder P-Bild in der vorhergehenden Gruppe der gleichen Filmszene vorwärts prädiziert werden und/oder von dem ersten I- oder P-Bild in der aktuellen Gruppe rückwärts prädiziert werden.

## Claims

1. Method of coding an MPEG2 picture sequence using DCT transformation (23) and quantisation (24), **characterised by**:
- said picture sequence contains a stroboscopic change between two different film scenes (*, #), wherein in each case a first group of pictures (1-4; 9-12) alternates with a second group of pictures (5-8; 13-16);
- for coding said picture sequence two picture buffers are used, wherein one picture buffer (30) is used for predicting pictures of said first film scene and the other picture buffer (32) is used for predicting pictures of said second film scene, and both picture buffers store only I pictures or P pictures but no B pictures;
- if the first picture of a current group of pictures is no I or P picture, the picture or pictures preceding said I or P picture is/are forward predicted from the last I or P picture in the preceding group of the same film scene, and/or is/are backward predicted from the first I or P picture in the current group;
- into the data stream for the coded picture sequence, for at least every predicted picture of said stroboscopic change, an item of information (stroboscope_mode) is inserted specifying that the picture belongs to a stroboscopic sequence, and an item of information (scene1_flag) specifying from the content of which one of said both picture buffers (30, 32) the current picture was predicted.

2. Apparatus for coding an MPEG2 picture sequence using DCT transformation (23) and quantisation (24), wherein said picture sequence contains a stroboscopic change between two different film scenes (*, #), wherein in each case a first group of pictures (1-4; 9-12) alternates with a second group of pictures (5-8; 13-16), and wherein said apparatus comprises:
- two picture buffers and two MC units, wherein one picture buffer (30) serves for predicting in said first MC unit (31) pictures of said first film scene and the other picture buffer (32) serves for predicting in said second MC unit (33) pictures of said second film scene, and both picture buffers store only I pictures or P pictures but no B pictures,
wherein, if the first picture of a current group of pictures is no I or P picture, the picture or pictures preceding said I or P picture is/are forward predicted from the last I or P picture in the preceding group of the same film scene, and/or is/are backward predicted from the first I or P picture in the current group;
- means (25) which insert into the data stream for the coded picture sequence, for at least every predicted picture of said stroboscopic change, an item of information (stroboscope_mode) specifying that the picture belongs to a stroboscopic sequence, and an item of information (scene1_flag) specifying from the content of which one of said both picture buffers (30, 32) the current picture was predicted.

3. Method of decoding an MPEG2 coded picture sequence using inverse quantisation (28) and inverse DCT transformation (29), **characterised by**:
- said picture sequence contains a stroboscopic change between two different film scenes (*, #), wherein in each case a first group of pictures (1-4; 9-12) alternates with a second group of pictures (5-8; 13-16);
- if successive pictures belong to a stroboscopic sequence, for decoding said picture sequence two picture buffers are used, wherein one picture buffer (30) is used for predicting (31) pictures of said first film scene and the other picture buffer (32) is used for predicting (33) pictures of said second film scene, and both picture buffers store only I pictures or P pictures but no B pictures;
- from the data stream for the coded picture sequence, for at least every predicted picture of said stroboscopic change, an item of information (stroboscope_mode) is extracted (50) specifying that the picture belongs to a stroboscopic sequence, and an item of information (scene1_flag) specifying from the content of which one of said both picture buffers (30, 32) the current picture is to be predicted;
- if the first picture of a current group of pictures is no I or P picture, in the decoding the picture or pictures preceding said I or P picture is/are forward predicted from the last I or P picture in the preceding group of the same film scene, and/or is/are backward predicted from the first I or P picture in the current group.

4. Apparatus for decoding an MPEG2 coded picture sequence using inverse quantisation (28) and inverse DCT transformation (29), wherein said picture sequence contains a stroboscopic change between two different film scenes (*, #), wherein in each case a first group of pictures (1-4; 9-12) alternates with a second group of pictures (5-8; 13-16), and wherein said apparatus comprises:
- two picture buffers and two MC units wherein, if successive pictures belong to a stroboscopic sequence, in the decoding of said picture sequence one picture buffer (30) serves for predicting in said first MC unit (31) pictures of said first film scene and the other picture buffer (32) serves for predicting in said second MC unit (33) pictures of said second film scene, and both picture buffers store only I pictures or P pictures but no B pictures;
- means (50) which extract from the data stream for the coded picture sequence, for at least every predicted picture of said stroboscopic change, an item of information (stroboscope_mode) specifying that the picture belongs to a stroboscopic sequence, and an item of information (scenel_flag) specifying from the content of which one of said both picture buffers (30, 32) the current picture was predicted,
wherein, if the first picture of a current group of pictures is no I or P picture, the picture or pictures preceding said I or P picture is/are forward predicted from the last I or P picture in the preceding group of the same film scene, and/or is/are backward predicted from the first I or P picture in the current group.

## Revendications

1. Procédé pour le codage d'une séquence d'images MPEG2 au moyen d'une transformation DCT (23) et d'une quantification (24), **caractérisé en ce que** :
- la séquence d'images contient un changement stroboscopique entre deux scènes de film différentes (*, #), dans laquelle un groupe d'images (1-4 ; 9-12) d'une première scène de film alterne à chaque fois avec un groupe d'images (5-8 ; 13-16) d'une seconde scène de film ;
- pour le codage de la séquence d'images, deux mémoires d'images sont utilisées, l'une des mémoires d'images (30) étant utilisée pour la prédiction d'images de la première scène de film et l'autre mémoire d'images (32) étant utilisée pour la prédiction d'images de la seconde scène de film, et les deux mémoires d'images enregistrent uniquement des images I ou des images P, mais aucune image B ;
- lorsque la première image d'un groupe d'images actuel n'est pas une image I ou P, l'image se situant avant l'image I ou P ou les images se situant avant l'image I ou P sont prédites de manière anticipée par la dernière image I ou P dans le groupe précédent de la même scène de film et/ou prédites de manière différée par la première image I ou P dans le groupe actuel ;
- une information (stroboscope_mode) indiquant que l'image appartient à une séquence stroboscopique est ajoutée dans le flux de données pour la séquence d'images codée, pour au moins chaque image prédite du changement stroboscopique, ainsi qu'une information (scenel_flag) du contenu indiquant laquelle des deux mémoires d'images (30, 32) a prédit l'image actuelle.

2. Dispositif pour le codage d'une séquence d'images MPEG2 au moyen d'une transformation DCT (23) et d'une quantification (24), où la séquence d'images contient un changement stroboscopique entre deux scènes de film différentes (*, #), dans lesquelles un groupe d'images (1-4 ; 9-12) d'une première scène de film alterne à chaque fois avec un groupe d'images (5-8 ; 13-16) d'une seconde scène de film, et où le dispositif comprend:
- deux mémoires d'images et deux unités MC, où l'une des mémoires d'images (30) permet la prédiction d'images de la première scène de film dans la première unité MC (31) et l'autre mémoire d'images (32) permet la prédiction d'images de la seconde scène de film dans la seconde unité MC (33) et les deux mémoires d'images enregistrent uniquement des images I ou des images P, mais aucune image B,
et où, lorsque la première image d'un groupe d'images actuel n'est pas une image I ou P, l'image se situant avant l'image I ou P ou les images se situant avant l'image I ou P sont prédites de manière anticipée par la dernière image I ou P dans le groupe précédent de la même scène de film et/ou prédites de manière différée par la première image I ou P dans le groupe actuel,
- des moyens (25) qui ajoutent, dans le flux de données pour la séquence d'images codée pour au moins chaque image prédite du changement stroboscopique, une information (stroboscope_mode) indiquant que l'image appartient à une séquence stroboscopique, et une information (scenel_flag) du contenu indiquant laquelle des deux mémoires d'images (30, 32) a prédit l'image actuelle.

3. Procédé pour le décodage d'une séquence d'images codée MPEG2 au moyen d'une quantification inverse (28) et d'une transformation DCT inverse (29), **caractérisé en ce que**:
- la séquence d'images contient un changement stroboscopique entre deux scènes de film différentes (*, #), dans laquelle un groupe d'images (1-4 ; 9-12) d'une première scène de film alterne à chaque fois avec un groupe d'images (5-8 ; 13-16) d'une seconde scène de film ;
- lorsque des images consécutives appartiennent à une séquence stroboscopique, deux mémoires d'images sont utilisées pour le décodage de la séquence d'images, où l'une des mémoires d'images (30) est utilisée pour la prédiction (31) d'images de la première scène de film et l'autre mémoire d'images (32) est utilisée pour la prédiction (33) d'images de la seconde scène de film, et les deux mémoires d'images enregistrent uniquement des images I ou des images P, mais aucune image B ;
- du flux de données pour la séquence d'images codée sont extraites (50), pour au moins chaque image prédite du changement stroboscopique, une information (stroboscope mode) indiquant que l'image appartient à une séquence stroboscopique, et une information (scene1_flag) du contenu indiquant laquelle des deux mémoires d'images (30, 32) doit prédire l'image actuelle ;
- lorsque la première image d'un groupe d'images actuel n'est pas une image I ou P, lors du décodage, l'image se situant avant l'image I ou P ou les images se situant avant l'image I ou P sont prédites de manière anticipée par la dernière image I ou P dans le groupe précédent de la même scène de film et/ou prédites de manière différée par la première image I ou P dans le groupe actuel;

4. Dispositif pour le décodage d'une séquence d'images codée MPEG2 au moyen d'une quantification inverse (28) et d'une transformation DCT inverse (29), où la séquence d'images contient un changement stroboscopique entre deux scènes de film différentes (*, #), dans laquelle un groupe d'images (1-4 ; 9-12) d'une première scène de film alterne à chaque fois avec un groupe d'images (5-8 ; 13-16) d'une seconde scène de film, et où le dispositif comprend:
- deux mémoires d'images et deux unités MC, où, lorsque des images consécutives appartiennent à une séquence stroboscopique, lors du décodage de la séquence d'images, l'une des mémoires d'images (30) permet la prédiction d'images de la première scène de film dans la première unité MC (31) et l'autre mémoire d'images (32) permet la prédiction d'images de la seconde scène de film dans la seconde unité MC (33) et les deux mémoires d'images enregistrent uniquement des images I ou des images P, mais aucune image B,
- des moyens (50) qui extraient du flux de données pour la séquence d'images codée pour au moins chaque image prédite du changement stroboscopique, une information (stroboscope_mode) indiquant que l'image appartient à une séquence stroboscopique, et une information (scenel_flag) extraite du contenu indiquant laquelle des deux mémoires d'images (30, 32) a prédit l'image actuelle ;
et où, lorsque la première image d'un groupe d'images actuel n'est pas une image I ou P, l'image se situant avant l'image I ou P ou les images se situant avant l'image I ou P sont prédites de manière anticipée par la dernière image I ou P dans le groupe précédent de la même scène de film et/ou prédites de manière différée par la première image I ou P dans le groupe actuel.
